# FASCICULE DE BREVET EUROPEEN

(11) **EP 2 355 331 B1**
(45) Date de publication et mention de la délivrance du brevet: **21.01.2015**
(21) Numéro de dépôt: 10354087.8
(22) Date de dépôt: 06.12.2010
(51) Int. Cl.: H02M 7/483

(54) **Dispositif convertisseur et alimentation sans interruption équipée d'un tel dispositif**
Wandlervorrichtung und mit einer solchen vorrichtung ausgerüstete unterbrechungslose versorgung
Converter apparatus and supply equipped with such apparatus

(30) Priorité: 05.02.2010 FR 1000469
(43) Date de publication de la demande: 10.08.2011
(73) Titulaire: MGE UPS Systems, 38330 Montbonnot-Saint-Martin (FR)
(72) Inventeur: Lacarnoy, Alain, 38050 Grenoble Cedex 09 (FR)
(74) Mandataire: Tripodi, Paul

(56) Documents cités:
- US-A1- 2007 109 824
- US-B1- 6 838 925

## Description

### DOMAINE TECHNIQUE DE L'INVENTION

L'invention relève du domaine des convertisseurs tels que les onduleurs, par exemple ceux utilisés dans les alimentations sans interruption, en particulier dans les alimentations sans interruption de forte puissance, c'est-à-dire dont la puissance est généralement comprise entre environ 100 et 500 kVA.

L'invention concerne, plus particulièrement, un dispositif convertisseur permettant de fournir une tension VS et un courant IS alternatifs par filtrage d'impulsions obtenues sur une sortie de signal modulé SM à partir de trois tensions -U/2, UREF, U/2 sensiblement continues disponibles sur une ligne de tension de référence REF et sur deux entrées P, N de tensions continues de signes opposés de respectivement deux unités de commutation UC1, UC4, chaque unité de commutation comportant une sortie de commutation S1, S4 pour fournir des impulsions ayant une amplitude variant entre la tension sur l'entrée de ladite unité de commutation, dans un premier état de commutation de ladite unité de commutation, et la tension sur ladite ligne de tension de référence dans un second état de commutation de ladite unité de commutation, chaque unité de commutation comportant un premier interrupteur T1, T4 connecté entre l'entrée et la sortie de commutation S1, S4 de ladite unité de commutation pour établir ledit premier état de commutation par conduction dudit premier interrupteur, ledit dispositif comprenant, pour chaque unité de commutation, un second interrupteur T2, T3 associé à ladite unité de commutation, connecté entre ladite unité de commutation et ladite sortie de signal modulé pour activer ladite unité de commutation par conduction dudit second interrupteur.

L'invention concerne également une alimentation sans interruption 101 comprenant une entrée d'alimentation 102 sur laquelle est appliquée une tension d'entrée alternative, un redresseur 103 connecté à ladite entrée, deux lignes de tensions sensiblement continues de signes opposés connectées en sortie dudit redresseur, un onduleur 106 connecté aux dites lignes de tension de tension sensiblement continue et comportant une sortie 107 destinée à fournir une tension sécurisée.

### ÉTAT DE LA TECHNIQUE

Les onduleurs sont développés pour améliorer leur rendement et pour réduire les nuisances sonores engendrées par des fréquences de découpage souvent basses, de l'ordre de quelques milliers d'hertz. Dans ce contexte, il a été montré qu'il était intéressant d'utiliser des onduleurs présentant des topologies sur plusieurs niveaux, généralement trois niveaux.

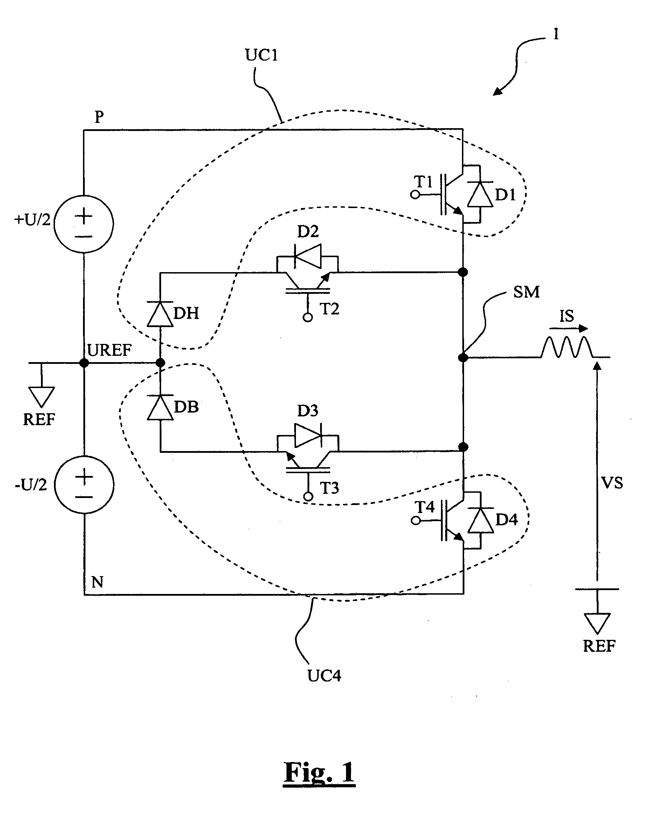

En référence à la figure 1 selon l'art antérieur, l'onduleur à trois niveaux représenté sous la référence 1 permet de fournir une tension VS et un courant IS alternatifs sur une ligne de phase. La tension VS et le courant IS alternatifs sont obtenus par filtrage d'impulsions obtenues sur une sortie de signal modulé SM à partir de trois niveaux de tensions sensiblement continues -U/2, UREF, U/2 disponibles sur une ligne de tension de référence REF et sur deux sources de tensions de signes opposés connectées aux entrées P, N des unités de commutation décrites ci-après. Les moyens de filtrage utilisés comportent une inductance L connectée entre la sortie de signal modulé SM et la sortie de tension VS et de courant IS alternatifs. Les moyens de filtrage comportent généralement un condensateur C, non représenté, qui est connecté entre la sortie de tension VS alternative et un point de référence de tension présentant un même potentiel électrique que la ligne de tension de référence REF.

L'onduleur représenté à la figure 1 comprend deux unités de commutation UC1, UC4 commandées par l'entremise d'une unité de commande non représentée. Les unités de commutation comprennent respectivement une entrée de tension continue positive P et une entrée de tension continue négative N connectées à la source de tension respectivement positive et négative. Chaque unité de commutation UC1, UC4 est connectée, d'un côté, à la source de tension correspondant à l'une ou l'autre des dites entrées P, N et à la ligne de tension de référence REF, et de l'autre côté, à la sortie de signal modulé SM. Chaque unité de commutation UC1, UC4 comprend un premier interrupteur pourvu d'un transistor T1, T4 connecté entre l'entrée de tension P, N de ladite unité de commutation et la sortie de signal modulé SM. Lors de la conduction du transistor T1, T4 d'une unité de commutation UC1, UC4, la tension sur la sortie de signal modulé SM est sensiblement égale à la tension continue +U/2, -U/2 de l'entrée de tension P, N de ladite unité de commutation. Cet état de conduction du transistor T1, T4 correspond à un premier état de commutation de l'unité de commutation UC1, UC4. Dans ce premier état de commutation, le transistor T1, T4 peut transférer la puissance de l'entrée P, N vers la sortie de signal modulé SM. Lorsque le transistor T1, T4 est bloqué, des seconds interrupteurs T2, T3 décrits ci-après permettent de faire passer la tension sur la sortie de signal modulé SM à une valeur sensiblement égale à la tension de référence, ce qui correspond à un second état de commutation de l'unité de commutation UC1, UC4.

L'onduleur représenté à la figure 1 comprend, en outre, pour chaque unité de commutation UC1, UC4, le second interrupteur évoqué précédemment. Ce second interrupteur est pourvu d'un transistor T2, T3 connecté entre ladite unité de commutation et la sortie de signal modulé SM. Le transistor T2, T3 de chaque unité de commutation UC1, UC4 permet essentiellement, lorsqu'il est passant, d'activer la commutation de ladite unité de commutation en fonction du signe de la tension alternative VS. Le transistor T2, T3 de chaque unité de commutation UC1, UC4 permet, entre autres, d'activer le passage du premier état de commutation à un second état de commutation de ladite unité de commutation, lorsque la tension alternative VS est de même signe que la tension disponible sur l'entrée P, N de ladite unité de commutation.

Chaque unité de commutation UC1, UC4 comprend, en outre, une diode DH, DB connectée entre la ligne de tension de référence REF et la sortie de signal modulé SM. Plus précisément, le transistor T2, T3 et la diode DH, DB de chaque unité de commutation sont connectées en série entre la ligne de tension de référence REF et la sortie de signal modulé SM. La diode DH, DB de chaque unité de commutation UC1, UC4 permet de passer du premier état de commutation au second état de commutation, lors du blocage du transistor T1, T4. Ce second état de commutation associé au blocage du transistor T1, T4 permet, lorsque le transistor T2, T3 est conducteur, d'obtenir sur la sortie de signal modulé SM une tension sensiblement égale à la tension de référence UREF. De cette façon, le transistor T1, T4 de chaque unité de commutation UC1, UC4 permet de fournir, sur la sortie de signal modulé SM, lorsque ladite unité de commutation est activée, des impulsions ayant une amplitude variant entre une valeur de la tension sur l'entrée de ladite unité de commutation, dans un premier état de commutation de ladite unité de commutation, et une valeur de la tension sur la ligne de tension de référence, dans un second état de commutation de ladite unité de commutation. Il est à noter que ces impulsions présentent un même signe que celui de la tension disponible sur l'entrée de tension P, N de l'unité de commutation considéré.

Les transistors T1, T2, T3, T4 des premiers et des seconds interrupteurs sont généralement des transistors bipolaires à grille isolée de type IGBT, qui sont généralement utilisés dans les interrupteurs électroniques de puissance. Chacun de ces interrupteurs comprennent une diode D1, D2, D3, D4 montée en parallèle sur le transistor T1, T2, T3, T4 dudit interrupteur et orientée pour conduire lorsque ledit transistor est polarisé en inverse. Ces diodes D1, D2, D3, D4 permettent un fonctionnement du dispositif convertisseur pendant les phases réactives, c'est-à-dire lorsque la tension alternative VS et le courant alternatif IS ont des signes opposés.

Lors de la mise en oeuvre du dispositif convertisseur de la figure 1, lorsque le premier interrupteur T1 de l'unité de commutation UC1 est ouvert, c'est-à-dire lorsque le transistor T1 dudit premier interrupteur est bloqué, l'ouverture du premier interrupteur T4 de l'unité de commutation UC4 entraîne une chute de tension aux bornes du premier interrupteur T1 sensiblement égale à la différence de potentiels U entre les entrées P, N des unités de commutation UC1, UC4. Il s'ensuit que le calibre en tension des transistors des premiers interrupteurs T1, T4 doit être choisi supérieur à cette différence de potentiels U. Dans le cas où la différence de potentiels U/2 entre chaque entrée P, N et la ligne de référence est supérieure à 300 Volts, les premiers interrupteurs, c'est-à-dire les transistors T1, T4, doivent donc avoir un calibre en tension supérieur à 600 Volts, c'est-à-dire généralement un calibre en tension de 1200 Volts.

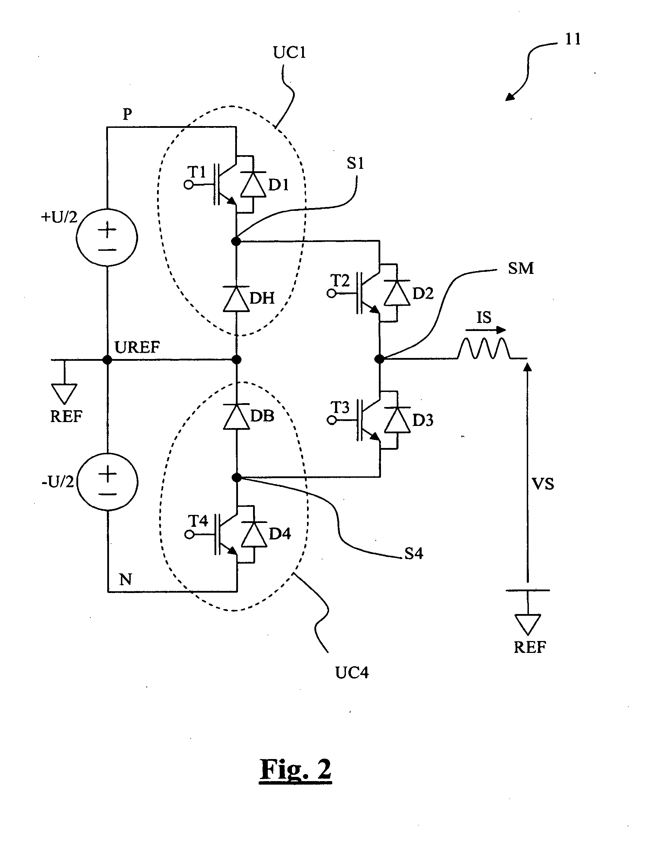

En référence à la figure 2 selon l'art antérieur, l'onduleur à trois niveaux représenté sous la référence 11 comprend essentiellement les mêmes composants que celui représenté à la figure 1, mais ces éléments sont agencés différemment. Par rapport à l'onduleur 1 représenté à la figure 1, l'onduleur 11 permet de réduire le calibre des premiers interrupteurs T1, T4. Dans ce montage, les unités de commutation UC1, UC4 sont agencés différemment et comportent des sorties de commutation S1, S4 distinctes de la sortie de signal modulé SM. Le premier interrupteur, c'est-à-dire le transistor T1, T4, de chaque unité de commutation UC1, UC4 est connecté entre l'entrée P, N et la sortie de commutation S1, S4 de ladite unité de commutation. Le premier état de commutation est établi par fermeture du premier interrupteur, c'est-à-dire par conduction du transistor T1, T4 dudit premier interrupteur. La diode DH, DB de chaque unité de commutation UC1, UC4 est connectée entre la ligne de tension de référence REF et la sortie de commutation S1, S4 de ladite unité de commutation, pour établir le second état de commutation lorsque le premier interrupteur est ouvert, c'est-à-dire lorsque le transistor T1, T4 du premier interrupteur est bloqué. La diode DH, DB de chaque unité de commutation UC1, UC4 permet ainsi d'établir sur la sortie de commutation S1, S4 de ladite unité de commutation, lors de l'ouverture du premier interrupteur T1, T4, une tension égale à la tension de référence. Le second interrupteur T2, T3 associé à l'unité de commutation UC1, UC4 est connecté entre ladite unité de commutation et la sortie de signal modulé SM, et permet d'activer ladite unité de commutation par conduction dudit second interrupteur. Plus précisément, le second interrupteur T2, T3 associé à l'unité de commutation UC1, UC4 est connecté entre la sortie de commutation S1, S4 de ladite unité de commutation et la sortie de signal modulé SM. Par activer une unité de commutation, on entend transférer les impulsions de la sortie de commutation S1, S4 de ladite unité de commutations vers la sortie de signal modulé SM.

Lorsque l'unité de commutation UC1, UC4 de l'onduleur de la figure 2 est dans le premier état de commutation correspondant à la fermeture du premier interrupteur T1, T4 et lorsque ladite unité de commutation est activée par conduction du second interrupteur T2, T3, le premier interrupteur T1, T4 transfère la puissance disponible sur l'entrée P, N de ladite unité de commutation vers la sortie de signal modulé SM. Cependant, cette puissance est transférée à travers non seulement le premier interrupteur T1, T4, mais également à travers le second interrupteur T2, T3. Il s'ensuit que les chutes de tension dans ces deux composants qui sont maintenues pendant toute la durée du premier état de commutation, ce qui entraîne des déperditions énergétiques conséquentes.

Le brevet américain US 6,838,925 décrit un onduleur présentant une architecture similaire à celle du dispositif convertisseur représenté à la figure 2, dans lequel les premiers interrupteurs sont pourvus de transistors à effet de champs de type MOS qui présentent de meilleures performances en commutation que les transistors utilisés dans les onduleurs représentés sur les figures 1 et 2. Cependant, ce type de transistors n'est pas adapté pour le transfert d'une puissance comprise entre 100 et 500 kVA. Par ailleurs, la mise en oeuvre d'un tel dispositif entraîne également des déperditions énergétiques générées par les chutes de tension à la fois dans le premier et le second interrupteur, pendant les transferts de puissance entre les entrées de tensions continues et la sortie de signal modulé.

### EXPOSÉ DE L'INVENTION

L'invention vise à apporter une solution aux problèmes des onduleurs de l'art antérieur en proposant un dispositif convertisseur permettant de fournir une tension et un courant alternatifs par filtrage d'impulsions obtenues sur une sortie de signal modulé à partir de trois tensions sensiblement continues disponibles sur une ligne de tension de référence et sur deux entrées de tensions continues de signes opposés de respectivement deux unités de commutation, chaque unité de commutation comportant une sortie de commutation pour fournir des impulsions ayant une amplitude variant entre la tension sur l'entrée de ladite unité de commutation, dans un premier état de commutation de ladite unité de commutation, et la tension sur ladite ligne de tension de référence, dans un second état de commutation de ladite unité de commutation, chaque unité de commutation comportant un premier interrupteur connecté entre l'entrée et la sortie de commutation de ladite unité de commutation pour établir ledit premier état de commutation par fermeture dudit premier interrupteur, ledit dispositif comprenant, pour chaque unité de commutation, un second interrupteur associé à ladite unité de commutation, connecté entre ladite unité de commutation et ladite sortie de signal modulé pour activer ladite unité de commutation par fermeture dudit second interrupteur, ledit dispositif convertisseur étant caractérisé en ce qu'il comprend, pour chaque unité de commutation, un troisième interrupteur connecté entre l'entrée de ladite unité de commutation et la sortie de signal modulé, ledit premier interrupteur étant commandé de façon à passer du premier état de commutation au second état de commutation, dans un sens ou dans l'autre, en maintenant ledit troisième interrupteur ouvert, ledit troisième interrupteur étant commandé pour être fermé pendant au moins une partie de la durée dudit premier état de commutation.

De préférence, chaque unité de commutation comprend, en outre, une diode connectée entre la ligne de tension de référence et la sortie de commutation de ladite unité de commutation, pour établir le second état de commutation lorsque le premier interrupteur est ouvert.

Alternativement, chaque unité de commutation comprend, en outre, un quatrième interrupteur connecté entre la ligne de tension de référence et la sortie de commutation de ladite unité de commutation, pour établir le second état de commutation lorsque le premier interrupteur est ouvert. Avantageusement, le quatrième interrupteur de chaque unité de commutation est pourvu d'un transistor et d'une diode montée en parallèle sur ledit transistor et orientée pour conduire lorsque ledit transistor est polarisé en inverse.

De préférence, le second interrupteur associé à chaque unité de commutation est disposé entre la sortie de commutation de ladite unité de commutation et la sortie de signal modulé.

De préférence, les premiers, les seconds et les troisièmes interrupteurs comportent des transistors. Avantageusement, les premiers, les seconds et les troisièmes interrupteurs comportent des diodes montées en parallèle avec respectivement chacun des transistors desdits interrupteurs et orientées pour conduire lorsque ledit transistor est polarisé en inverse.

Selon un mode de réalisation, les transistors des premiers, des seconds et des troisièmes interrupteurs sont des transistors bipolaires à grille isolée de type IGBT

Selon un mode de réalisation, les transistors des premiers interrupteurs sont des transistors à effet de champs en carbure de silicium, et en ce que les seconds et les troisièmes interrupteurs comportent des diodes montées en parallèle avec respectivement chacun des transistors desdits interrupteurs et orientées pour conduire lorsque ledit transistor est polarisé en inverse.

Selon un mode de réalisation, le transistor du premier interrupteur de chaque unité de commutation est un transistor à effet de champs de type MOS, le second interrupteur associé à ladite unité de commutation comportant plusieurs diodes en série montées en parallèle avec le transistor dudit second interrupteur et orientées pour conduire lorsque ledit transistor est polarisé en inverse.

Selon un mode de réalisation, le dispositif convertisseur comprend un cinquième interrupteur monté entre la ligne de tension de référence et la sortie de signal modulé. De préférence, le cinquième interrupteur comprend deux transistors à effet de champs de type MOS montés en série et orientés pour conduire le courant dans des directions opposées, ledit cinquième interrupteur comprenant, pour chacun desdits deux transistors, une diode montée en parallèle sur ledit transistor et orientée pour conduire lorsque ledit transistor est polarisé en inverse.

De préférence, le dispositif convertisseur comprend, pour chaque unité de commutation:
- des premiers moyens de commande agissant sur le premier interrupteur de ladite unité de commutation pour fermer ou ouvrir ledit premier interrupteur pour passer du premier état de commutation au second état de commutation, dans un sens ou dans l'autre, en maintenant le troisième interrupteur ouvert
- des seconds moyens de commande agissant sur le troisième interrupteur de ladite unité de commutation pour fermer ledit troisième interrupteur après le passage du second état de commutation au premier état de commutation.

L'invention concerne également, une alimentation sans interruption comprenant une entrée d'alimentation sur laquelle est appliquée une tension d'entrée alternative, un redresseur connecté à ladite entrée, deux lignes de tensions sensiblement continues de signes opposés connectées en sortie dudit redresseur, un onduleur connecté aux dites lignes de tension de tension sensiblement continue et comportant une sortie destinée à fournir une tension sécurisée, ladite alimentation étant caractérisée en ce que ledit onduleur est un dispositif tel que décrit précédemment et fournissant à partir des tensions sensiblement continues une tension sécurisée alternative.

### BRÈVE DESCRIPTION DES FIGURES

D'autres avantages et caractéristiques ressortiront plus clairement de la description qui suit de modes particuliers de réalisation de l'invention, donnés à titre d'exemples non limitatifs, et représentés dans les figures annexées.
La figure 1 représente un dispositif convertisseur selon l'art antérieur.
La figure 2 représente un autre dispositif convertisseur selon l'art antérieur.
La figure 3 représente un premier mode de réalisation d'un dispositif convertisseur selon l'invention.
La figure 4 représente l'unité de commande d'un dispositif convertisseur selon l'invention.
Les figures 5A à 5F représentent les variations dans le temps de signaux de commande, de tensions et de courants en différents points du dispositif convertisseur selon l'invention.
La figure 6 représente un second mode de réalisation d'un dispositif convertisseur selon l'invention.
La figure 7 représente un troisième mode de réalisation d'un dispositif convertisseur selon l'invention.
La figure 8 représente un quatrième mode de réalisation d'un dispositif convertisseur selon l'invention.
La figure 9 représente un cinquième mode de réalisation d'un dispositif convertisseur selon l'invention.
La figure 10 représente une alimentation sans interruption comportant un dispositif convertisseur selon l'invention.

### DESCRIPTION DETAILLEE D'UN MODE DE RÉALISATION

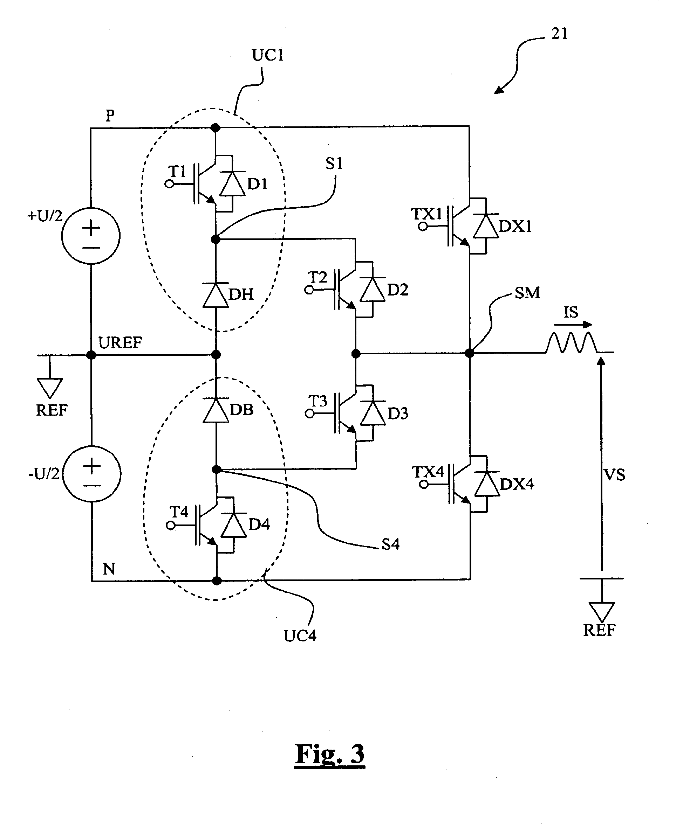

En référence à la figure 3, le dispositif convertisseur représenté sous la référence 21 comprend les mêmes composants que ceux de l'onduleur représenté à la figure 2, et ces composants sont référencés de la même façon. Le dispositif convertisseur 21 comprend, en outre, pour chaque unité de commutation UC1, UC4, un troisième interrupteur TX1, TX4 connecté entre l'entrée P, N de ladite unité de commutation et la sortie de signal modulé SM. Plus précisément, le troisième interrupteur TX1, TX4 est directement connecté entre l'entrée P, N de ladite unité de commutation et la sortie de signal modulé SM. Les premiers, les seconds et les troisièmes interrupteurs sont chacun pourvus de transistors. Dans ce qui suit, pour plus de clarté, les interrupteurs pourront être référencés de la même façon que les transistors qu'ils comportent.

Dans le mode de réalisation représenté à la figure 3, les transistors T1, T2, T3, T4, TX1, TX4 des premiers, des seconds et des troisièmes interrupteurs sont des transistors bipolaires à grille isolée de type IGBT. Chaque interrupteur comprend une diode D1, D2, D3, D4, DX1, DX4 montée en parallèle sur le transistor T1, T2, T3, T4, TX1, TX4 dudit interrupteur et orientée pour conduire lorsque ledit transistor est polarisé en inverse. Ces diodes D1, D2, D3, D4, DX1, DX4 permettent un fonctionnement du dispositif convertisseur pendant les phases réactives, c'est-à-dire lorsque la tension alternative VS et le courant alternatif IS ont des signes opposés.

Le premier interrupteur T1, T4 de chaque unité de commande UC1, UC4 est commandé de façon à passer du premier au second état de commutation, dans un sens ou dans l'autre, en maintenant le troisième interrupteur TX1, TX4 ouvert. Le troisième interrupteur TX1, TX4 de chaque unité de commande UC1, UC4 est, quant à lui, commandé pour être fermé afin de transférer la puissance entre l'entrée P, N et la sortie de signal modulé SM, pendant au moins une partie de la durée pendant laquelle ladite unité de commutation est dans le premier état de commutation. De cette façon, le transfert de la puissance au moyen du troisième interrupteur TX1, TX4 s'accompagne d'une chute de tension seulement aux bornes dudit troisième interrupteur. En réalisant le transfert de la puissance au moyen du troisième interrupteur TX1, TX4 sur une grande partie de la durée du premier état de commutation, on réduit ainsi les déperditions énergétiques en obtenant une chute de tension seulement dans un interrupteur au lieu de deux.

De surcroît, les commutations des transistors TX1, TX4 étant réalisées sous une tension presque nulle, les pertes énergétiques de commutation de ces transistors sont très faibles. Cette caractéristique permet donc de sous-dimensionner les transistors TX1, TX4 et/ou les moyens de refroidissement de ces transistors. Avantageusement, les moyens de commande sont conçus pour réaliser faire conduire les transistors T1, T4, avant la conduction des transistors TX1, TX4. Lors de la mise en conduction des transistors TX1, TX4, la tension à leurs bornes est donc quasiment nulle, de l'ordre de quelques volts. Le même raisonnement s'applique au blocage des transistors TX1, TX4, qui est réalisé avant le blocage des transistors T1, T4.

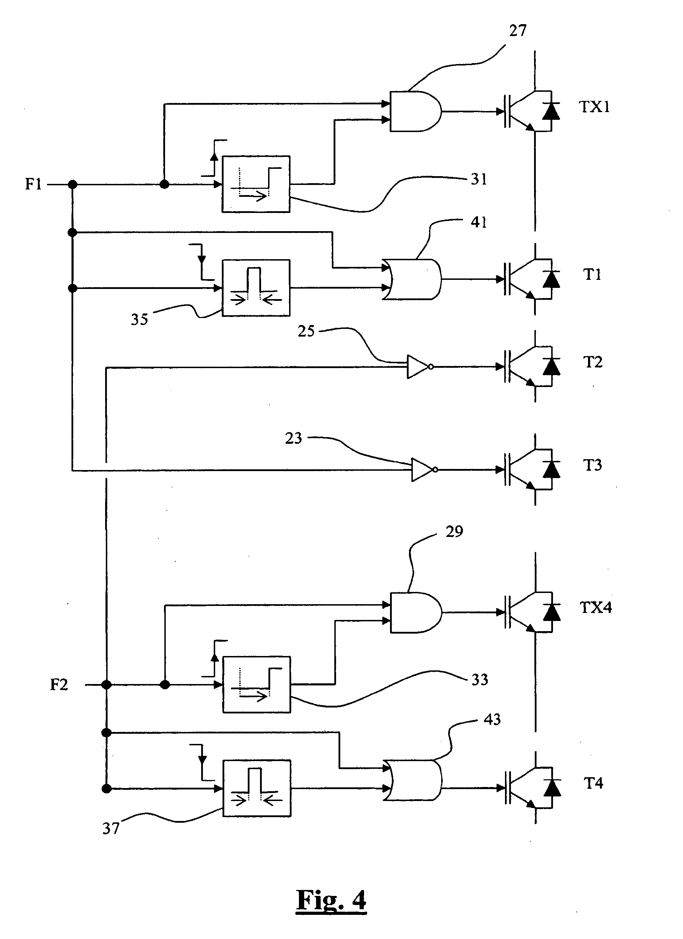

Un exemple d'unité de commande pour commander les premiers, les seconds et les troisièmes interrupteurs T1, T2, T3, T4, TX1, TX4 est décrit dans ce qui suit, en référence à la figure 4. Les transistors des premiers, des seconds et des troisièmes interrupteurs sont commandés à partir de signaux de modulation de largeur d'impulsion F1, F2. Ces derniers peuvent être obtenus à l'aide d'un logiciel mis en oeuvre sur un microcontrôleur. Les signaux de modulation de largeur d'impulsion F1, F2 sont généralement des signaux de fréquence élevée, par exemple allant jusqu'à environ 100 kHz. Les signaux de modulation de largeur d'impulsion F1, F2 sont généralement déterminés en fonction de la tension alternative VS. La figure 4 représente les modules de traitement disposés entre les entrées des signaux de modulation de largeur d'impulsion F1, F2 et les entrées de commande des transistors T1, T2, T3, T4, TX1, TX4. Les signaux de commande appliqués à l'entrée de commande des transistors T1, T2, T3, T4, TX1, TX4 sont, au même titre que les signaux de modulation de largeur d'impulsion F1, F2, des signaux logiques discrets, c'est-à-dire ayant une amplitude pouvant être égale à zéro ou à l'unité. Lorsque l'amplitude du signal de commande appliqué sur l'entrée de commande d'un transistor est égale à zéro, ledit transistor est bloqué, et lorsque cette amplitude est égale à l'unité, ledit transistor conduit.

En ce qui concerne la commande des transistors T1, T4 des premiers interrupteurs, le signal de modulation de largeur d'impulsion F1, respectivement F2, est appliqué à l'entrée de commande du transistor T1, respectivement T4, par l'entremise d'un module de disjonction logique, c'est-à-dire un module de « OU » logique. Lorsque la tension alternative VS est positive, respectivement négative, la conduction du transistor T1, respectivement T4, permet de fournir sur la sortie de commutation S1, respectivement S4, une tension dont l'amplitude est égale à la tension continue positive +U/2, respectivement négative -U/2, ce qui correspond au premier état de commutation de l'unité de commutation UC1, respectivement UC4. De la même façon, lorsque la tension alternative VS est positive, respectivement négative, le blocage du transistor T1, respectivement T4, permet de rendre la diode DH, respectivement DB, passante, ce qui permet de fournir sur la sortie de commutation S1, respectivement S4, une tension dont l'amplitude est égale zéro, ce qui correspond au second état de commutation de l'unité de commutation UC1, UC4. Cette succession de conductions et de blocages appliqués sur le transistor T1, respectivement T4, permet ainsi d'obtenir sur la sortie de commutation S1, respectivement S4, des impulsions de largeur variable ayant une amplitude sensiblement égale à la tension continue U/2 et ayant un signe positif, respectivement négatif.

En ce qui concerne la commande du transistor T2, T3 du second interrupteur de chaque unité de commutation UC1, UC4, elle est conçue pour activer la commutation de ladite unité de commutation, en fonction du signe de la tension alternative VS en rendant passant ledit transistor. Plus précisément, le transistor T2, T3 de chaque unité de commutation UC1, UC4 permet de transférer les impulsions de la sortie de commutation S1, S4 de ladite unité de commutation vers la sortie de signal modulé SM du dispositif convertisseur, lorsque la tension alternative VS est de même signe que la tension que la tension disponible sur l'entrée P, N de ladite unité de commutation. Pour cela, l'unité de commande comporte un inverseur 23 et un inverseur 25 interposés entre l'entrée du signal de modulation de largeur d'impulsion F1, respectivement F2, et l'entrée de commande du transistor T3, respectivement T2. De cette façon, le signal de modulation de largeur d'impulsion F1, respectivement F2, est inversé avant d'être appliqué sur l'entrée de commande du transistor T3, respectivement T2. Ainsi, lorsque la tension alternative VS est positive, respectivement négative, le signal de modulation de largeur d'impulsion F2, respectivement F1, est égal à zéro et le signal de commande en sortie de l'inverseur 23, respectivement 25, est donc égal à l'unité. Il s'ensuit que lorsque la tension alternative VS est positive, le transistor T2 conduit, de sorte que la sortie de commutation S1 de l'unité de commutation UC1 est connectée à la sortie de signal modulé SM. De la même façon, lorsque la tension alternative VS est négative, c'est le transistor T3 qui conduit, de sorte que la sortie de commutation S4 de l'unité de commutation UC4 est connectée à la sortie de signal modulé SM. Grâce à ces inverseurs 23, 25, il est possible de fournir sur la sortie de signal modulé SM, des impulsions de largeur variable ayant une amplitude sensiblement égale à la tension continue U/2 et ayant un signe identique au signe de la tension alternative VS. En d'autres termes, ces inverseurs 23, 25 permettent de connecter la sortie de commutation S1, S4 de l'unité de commutation UC1, UC4 à la sortie de signal modulé SM, lorsque le signe de la tension alternative VS est le même que celui de la tension disponible sur l'entrée de tension de ladite unité de commutation. Le filtrage consécutif de ces impulsions obtenues sur la sortie de signal modulé SM, aux moyens de l'inductance L et d'un condensateur non représenté, permet ainsi de fournir une tension alternative VS ayant une forme déterminée, par exemple sinusoïdale.

En ce qui concerne la commande du transistor TX1, TX4 du troisième interrupteur de chaque unité de commutation UC1, UC4, elle est conçue pour maintenir ledit troisième interrupteur ouvert pendant le passage du premier état de commutation au second état de commutation, et pour fermer ledit troisième interrupteur pendant au moins une partie de la durée dudit premier état de commutation. Pour cela, le signal de modulation de largeur d'impulsion F1, respectivement F2, est appliqué à l'entrée de commande du transistor TX1, respectivement TX4, par l'entremise d'un module de conjonction logique 27, 29, c'est-à-dire d'un module de « ET » logique. Concernant le transistor TX1, l'une des entrées du module de conjonction logique 27 est directement connectée à l'entrée du signal de modulation de largeur d'impulsion F1, et l'autre entrée dudit module logique est connectée à l'entrée du signal de modulation de largeur d'impulsion F1 par l'intermédiaire d'un module retardateur 31 actif pour les fronts montants dudit signal. De la même façon, concernant le transistor TX4, l'une des entrées du module de conjonction logique 29 est directement connectée à l'entrée du signal de modulation de largeur d'impulsion F2, et l'autre entrée dudit module logique est connectée à l'entrée du signal de modulation de largeur d'impulsion F2 par l'intermédiaire d'un module retardateur 33 également actif pour les fronts montants dudit signal.

De cette façon, lorsque le signal de modulation de largeur d'impulsion F1, respectivement F2, passe de zéro à l'unité, le transistor T1, respectivement T4 du premier interrupteur devient conducteur, ce qui correspond au passage du second au premier état de commutation de l'unité de commutation UC1, respectivement UC4. Pendant ce temps, le transistor TX1, respectivement TX4, du troisième interrupteur est dans un premier temps maintenu bloqué grâce au module retardateur 31, respectivement 33, et au module de conjonction logique 27, respectivement 29. Après une durée correspondant au retard du module retardateur 31, respectivement 33, l'amplitude des signaux sur les deux entrées du module de conjonction logique 27, respectivement 29, sont égaux à l'unité et le transistor TX1, respectivement TX4, du troisième interrupteur devient passant. L'impédance du transistor TX1, TX4 du troisième interrupteur étant plus faible par rapport à l'impédance dans le circuit formé par le transistor T1, T4 du premier interrupteur en série avec le transistor T2, T3 du second interrupteur, une grande partie du courant entre l'entrée de tension continue P, N et la sortie de signal modulé SM passe par le transistor TX1, TX4 du troisième interrupteur. Ainsi, le transfert de la puissance entre l'entrée P, N et la sortie de signal modulé SM est réalisé avec une chute de tension minimisée. L'utilisation du troisième interrupteur permet ainsi de réduire significativement les déperditions énergétiques.

Dans le mode de réalisation représenté à la figure 4, la commande des transistors T1, respectivement T4, des premiers interrupteurs de l'unité de commutation UC1, respectivement UC4, est réalisé à l'aide d'un module monostable 35, respectivement 37 connecté entre l'entrée du signal de modulation de largeur d'impulsion F1, respectivement F2 et l'une des entrées du module de disjonction logique référencé 41, respectivement 43, l'autre entrée dudit module de disjonction logique étant directement connectée à l'entrée du signal de modulation de largeur d'impulsion F1, respectivement F2. Le module monostable 35, 37 est actif sur les fronts descendants du signal de modulation de largeur d'impulsion F1, F2, et permet de changer l'état de sa sortie après une temporisation prédéterminée. De cette façon, lorsque le signal de modulation de largeur d'impulsion F1, respectivement F2, passe de l'unité à zéro, le transistor T1, respectivement T4, du premier interrupteur se bloque après la temporisation qui a été prédéterminée pour permettre le passage du premier au second état de commutation de l'unité de commutation UC1, respectivement UC4. Pendant ce temps, le transistor TX1, respectivement TX4, du troisième interrupteur est bloqué grâce au module de conjonction logique 27, respectivement 29. Ainsi, le passage du premier état de commutation au second état de commutation, dans un sens ou dans l'autre, est réalisé à l'aide du transistor T1, T4 du premier interrupteur, tout en maintenant le transistor TX1, TX4 du troisième interrupteur ouvert. De cette façon, le premier interrupteur T1, T4 est dédié aux commutations, c'est-à-dire au passage du premier état de commutation au second état de commutation, dans un sens ou dans l'autre, alors que le troisième interrupteur TX1, TX4 est dédié au transfert de puissance entre les entrées P, N de tension continue et la sortie de signal modulé pendant une grande partie de la durée des premiers états de commutation.

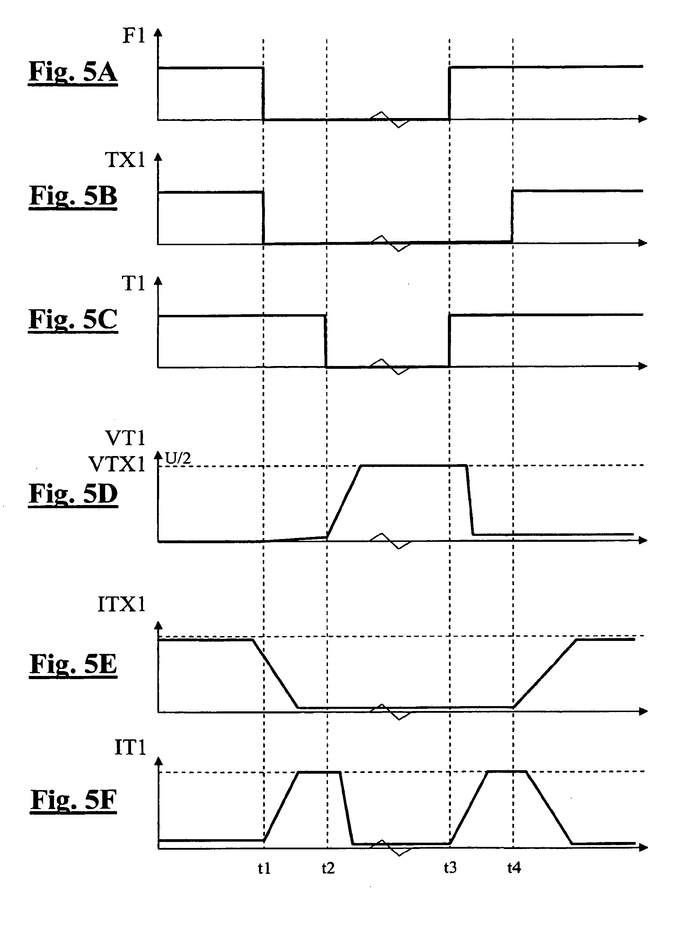

En référence aux figures 5A à 5F, le fonctionnement du dispositif convertisseur représenté à la figure 3 et associé à l'unité de commande représentée à la figure 4 est décrit dans ce qui suit. Cette description du fonctionnement concerne essentiellement le passage du premier au second état de commutation, ainsi que passage du second au premier état de commutation, de l'unité de commutation UC1, c'est-à-dire lorsque celle-ci est activée.

L'homme du métier peut aisément transposer cette description du fonctionnement de l'unité de commutation UC1 au fonctionnement de l'unité de commutation UC4.

Lorsque l'unité de commutation UC1 est activée, l'amplitude du signal de modulation de largeur d'impulsion F2 est égale à zéro, et le transistor T2 du second interrupteur associé à ladite unité de commutation conduit grâce à l'inverseur 25. Le transistor T3 du second interrupteur associé à l'unité de commutation UC4 est, quant à lui, bloqué, grâce à l'inverseur 23, et ladite unité de commutation est donc désactivée.

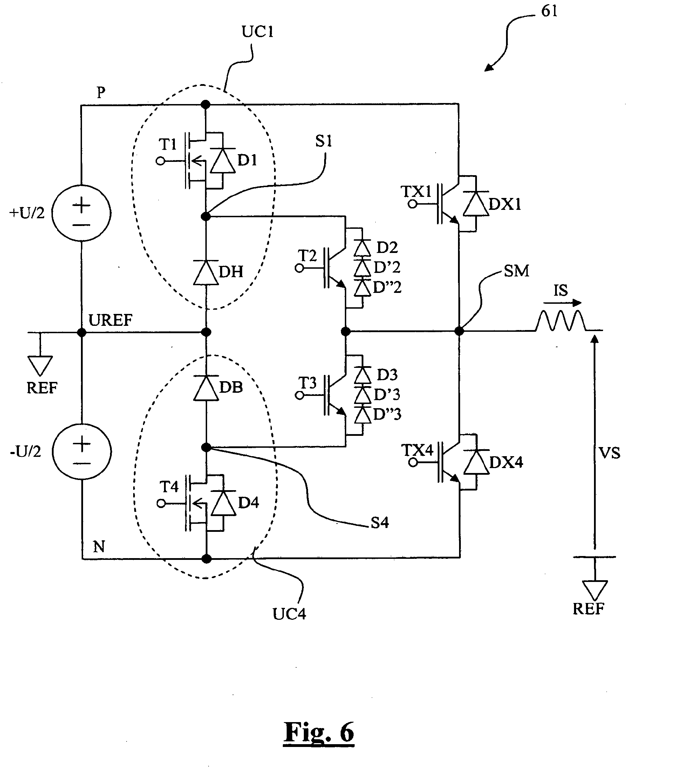

Tant que l'amplitude du signal de modulation de largeur d'impulsion F1 est égale à l'unité, le transistor T1 du premier interrupteur et le transistor TX1 du troisième interrupteur conduisent (figures 5A, 5B et 5C). La valeur de la tension sur la sortie de commutation S1 de l'unité de commutation UC1 est sensiblement égale à celle de la tension U/2 sur l'entrée P de ladite unité de commutation, ce qui correspond au premier état de commutation de ladite unité de commutation. Entre l'entrée P de tension continue et la sortie de signal modulé SM, la majorité du courant passe par le transistor TX1 du troisième interrupteur du fait que son impédance est plus faible par rapport à celle des deux transistors T1, T2 montés en série du premier et du second interrupteur. Il s'ensuit que le courant ITX1 (figure 5E) circulant dans le troisième interrupteur TX1 est très supérieur au courant IT1 (figure 6E) circulant dans le premier transistor T1. Les déperditions liées à la chute de tension dans les transistors, c'est-à-dire essentiellement dans le transistor TX1 du troisième interrupteur, est réduite par rapport à un dispositif du type de celui représenté à la figure 2, dans lequel l'ensemble du courant entre l'entrée P de tension continue et la sortie de signal modulé SM circule à la fois dans les deux transistors T1 et T2.

A un temps t1, l'amplitude du signal de modulation de largeur d'impulsion F1 passe de l'unité à zéro, et le transistor TX1 du troisième interrupteur se bloque (figures 5A et 5B), du fait que l'une des entrées du module de conjonction 27 passe à zéro. Le blocage du transistor T1 du premier interrupteur est reporté à un temps t2 grâce au module monostable 35 et au module de disjonction 41 (figure 5C). Il s'ensuit que le courant ITX1 (figure 5E) circulant dans le transistor TX1 du troisième interrupteur diminue pendant que le courant IT1 (figure 5F) circulant dans le transistor T1 du premier interrupteur s'accroit. Avant le temps t2, la quasi-totalité du courant entre l'entrée P de tension continue et la sortie de signal modulé SM circule à travers le transistor T1 (figure 5F). La tension sur la sortie de commutation S1 de l'unité de commutation UC1 est toujours sensiblement égale à la tension U/2 sur l'entrée P de ladite unité de commutation, ce qui correspond au premier état de commutation de ladite unité de commutation. Le passage du premier au second état de commutation sera réalisé à l'aide du transistor T1 du premier interrupteur, alors que le transistor TX1 du troisième interrupteur aura été préalablement bloqué.

Il est à noter que la durée entre les temps t1 et t2 est très courte, de l'ordre de la microseconde. Par ailleurs, les modules monostables 35, 37 constituent des moyens simples pour s'assurer que le troisième interrupteur TX1 est bien ouvert pendant le passage du premier au second état de commutation. Cependant, dans ce mode de réalisation simple et illustratif, il existe un décalage entre le passage du premier au second état de commutation de l'unité de commutation UC1, UC4 et le passage à zéro du signal de modulation de largeur d'impulsion F1, F2. Ce décalage crée une distorsion entre l'état de commutation et le signal de modulation de largeur d'impulsion F1, F2. Dans d'autres modes de réalisation qui n'ont pas été représentés, les modules monostables 35, 37 peuvent être remplacés par des moyens incluant des compteurs, des décompteurs et des comparateurs permettant d'anticiper le blocage du transistor T1, T4 du premier interrupteur à l'instant t1, avant le front descendant du signal de modulation de largeur d'impulsion F1, F2, ce qui permet de synchroniser l'ordre de blocage du transistor T1, T4 du premier interrupteur avec ledit signal de modulation de largeur d'impulsion F1, F2. De tels moyens de commande peuvent être déterminés par un homme du métier ayant pour objectif d'éviter ce problème de distorsion entre l'ordre de blocage du transistor T1, T4 du premier interrupteur et le signal de modulation de largeur d'impulsion F1, F2. La mise en oeuvre d'une telle unité de commande entraînerait que l'amplitude du signal de modulation de largeur d'impulsion F1, F2 passerait de l'unité à zéro au temps t1 au lieu du temps t2, et ceci sans modifier le reste des chronogrammes représentés sur les figures 5A à 5F.

Au temps t2, le transistor TX1 du troisième interrupteur est bloqué, c'est-à-dire le troisième interrupteur est ouvert, et le passage du premier au second état de commutation est réalisé à l'aide du transistor T1 du premier interrupteur (figure 5C). Le transistor T1 du premier interrupteur est donc bloqué et le courant entre l'entrée P de tension continue et la sortie de signal modulé SM s'annule (figure 5F). La tension aux bornes des transistors T1, TX1 du premier et du troisième interrupteur augmente jusqu'à atteindre une valeur sensiblement égale la tension continue U/2 sur l'entrée P. La valeur de la tension aux bornes des transistors T1 et TX1 du premier et du second interrupteur est réduite, par rapport à celle de la tension aux bornes du transistor T1 de l'onduleur représenté à la figure 1, qui serait égale au double de cette première valeur, c'est-à-dire égale à la différence de potentiels entre les deux entrées P, N. Il s'ensuit que le calibre en tension des transistors T1, TX1 du dispositif convertisseur 21 est réduit, par rapport au calibre du transistor T1 de l'onduleur 1 représenté à la figure 1.

A un temps t3, alors que le transistor TX1 du troisième interrupteur est toujours bloqué, c'est-à-dire que le troisième interrupteur est ouvert, l'amplitude du signal de modulation de largeur d'impulsion F1 passe de zéro à l'unité, et le transistor T1 devient conducteur grâce au module de disjonction 41 (figure 5A et 5C). La valeur de la tension sur la sortie de commutation S1 de l'unité de commutation UC1 passe de zéro à une valeur sensiblement égale à la tension U/2 sur l'entrée P de ladite unité de commutation, ce qui correspond au premier état de commutation de ladite unité de commutation. Il s'ensuit qu'un courant IT1 (figure 5E) circule entre l'entrée P de tension continue et la sortie de signal modulé SM, à travers le transistor T1 du premier interrupteur. La circulation de ce courant IT1 entraîne une chute de tension dans les deux transistors T1 et T2 du premier et du second interrupteur. Parallèlement, lorsque l'amplitude du signal de modulation de largeur d'impulsion F1 passe de zéro à l'unité, le module retardateur 31 est activé pour retarder la conduction du transistor TX1 du troisième interrupteur.

A un temps t4 correspondant au moment où le retard généré par le retardateur 31 s'est écoulé, le transistor TX1 du troisième interrupteur est rendu passant, c'est-à-dire que le troisième interrupteur est fermé. Il s'ensuit que la majorité du courant circulant entre l'entrée P de tension continue et la sortie de signal modulé SM passe par le transistor TX1 du troisième interrupteur du fait que son impédance est plus faible par rapport à celle des deux transistors du premier et du second interrupteur montés en série. Le courant ITX1 (figure 5E) circulant dans le troisième interrupteur TX1 devient très supérieur au courant IT1 (figure 6E) circulant dans le premier transistor T1, ce qui correspond à la situation avant le temps t1 décrite précédemment.

Dans ce qui suit, des variantes du dispositif convertisseur selon l'invention ont été décrites. Le fonctionnement de ces autres modes de réalisation est essentiellement le même que celui décrit précédemment.

Dans le dispositif convertisseur 61 représenté à la figure 6, les transistors T1, T4 des premiers interrupteurs sont des transistors à effet de champs de type MOS qui présentent des meilleures performances en commutation que les transistors bipolaires à grille isolée de type IGBT utilisés dans les premiers interrupteurs T1, T4 du dispositif convertisseur 21 représenté à la figure 3. Pendant les phases réactives, les diodes du premier, du second et du troisième interrupteur de l'unité de commutation UC1, UC4 activée deviennent passantes. Les mauvaises performances au blocage des diodes D1, D4 des transistors à effet de champs de type MOS des premiers interrupteurs T1, T4, se traduisent par des pertes énergétiques importantes de commutations. Il existe donc un intérêt à annuler, pendant les phases réactives, le courant circulant dans les diodes D1, D4. Pour ce faire, dans le mode de réalisation représenté à la figure 6, trois diodes D2, D'2, D"2, D3, D'3, D"3 ont été montées en parallèle sur le transistor T2, T3 du second interrupteur de chaque unité de commutation UC1, UC4, et orientées pour conduire lorsque ledit transistor est polarisé en inverse. De cette façon, pendant les phases réactives, la chute de tension dans les diodes D2, D3 du second interrupteur est supérieure à la chute de tension dans la diode DX1, DX4 du troisième interrupteur. Il s'ensuit que la totalité du courant réactif circulant entre la sortie de signal modulé SM et l'une ou l'autre des entrées P, N de tension continue passe à travers la diode DX1, DX4 du troisième interrupteur. Un autre avantage est que, pendant les phases réactives, les inductances parasites de câblage sont réduites, ce qui permet, de limiter les surtensions transitoires lors du blocage des transistors T2, T3. En effet, pendant les phases réactives, le courant circule dans les diodes DX1, DX4. Dans dispositif convertisseur de la figure 2, selon l'art antérieur, le courant est conduit par deux diodes au lieu d'une, en l'occurrence D1, D2, lorsque la première unité de commutation UC1 est activée, et D3, D4, lorsque la seconde unité de commutation UC4 est activée.

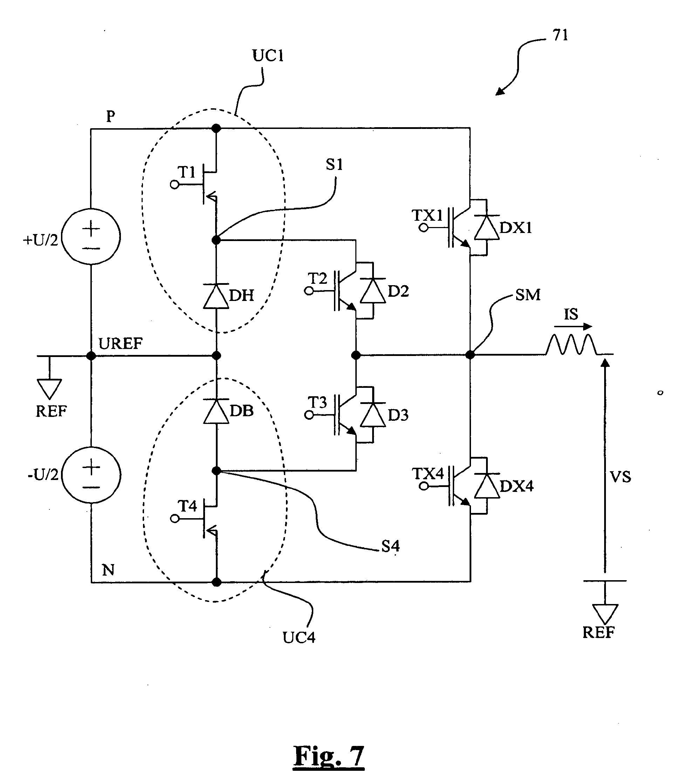

Dans le dispositif convertisseur 71 représenté à la figure 7, les transistors T1, T4 des premiers interrupteurs sont des transistors à effet de champs réalisés en carbure de silicium. Les diodes DH, DB sont également réalisées en carbure de silicium. Par ailleurs, les diodes D1, D4 montées en parallèle sur les transistors T1, T4 ont été supprimées. Dans d'autres modes de réalisation non représentés, des diodes D1, D4 en carbure de silicium pourraient être associées aux transistors T1, T4. Par rapport à un transistor à effet de champs de type MOS, l'utilisation d'un transistor à effet de champs réalisé en carbure de silicium permet d'augmenter la vitesse de commutation, d'améliorer la tenue en tension et d'éliminer la diode parasite intrinsèque dudit transistor. Par ailleurs, la position des transistors à effet de champs dans le montage de la figure 7 permet d'utiliser des transistors de type normalement fermé, ou en anglais "Normally ON", ou des transistors du type normalement ouvert, ou en anglais "normally OFF".

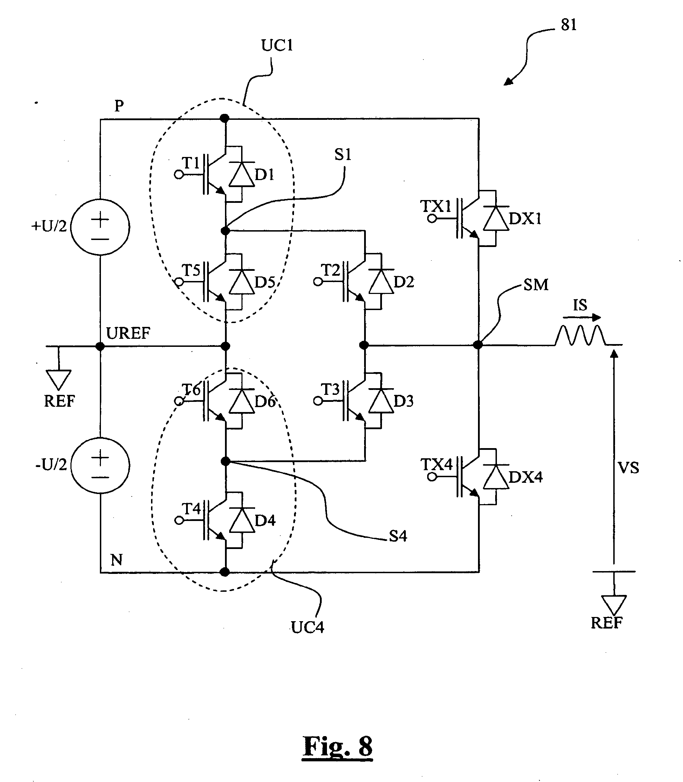

Dans le dispositif convertisseur 81 représenté à la figure 8, les transistors T1, T4 des premiers interrupteurs sont des transistors bipolaires à grille isolée de type IGBT. Par ailleurs, les diodes DH et DB ont été remplacées par des quatrièmes interrupteurs, chacun desdits quatrièmes interrupteurs comprenant un transistor bipolaire à grille isolée de type IGBT T5, T6 et une diode D5, D6 montée en parallèle sur ledit transistor et orientée pour conduire lorsque ledit transistor est polarisé en inverse. Le calibre en tension des transistors T5, T6 est, au même titre que celui des transistors T2, T3, égale à la moitié du calibre des transistors T2, T3 du dispositif convertisseur 21 représenté à la figure 3.

Les transistors T1, T4, T5, T6, TX1, TX4 commutent généralement à la fréquence de découpage et fonctionnent selon le même principe que dans le cas du dispositif convertisseur 21. Contrairement au dispositif convertisseur 21, les transistors T2, T3 ne commutent plus à la fréquence de découpage mais fonctionnent en mode permutateur, c'est-à-dire qu'ils commutent à la fréquence de la tension de sortie VS, qui est généralement égale à 50 à 60 Hz.

L'un des avantages du dispositif convertisseur 81 est qu'il facilite la montée en puissance grâce à des modules de puissance standards. En effet, l'ensemble comprenant le premier interrupteur T1, T4 et le quatrième interrupteur T5, T6 de chaque unité de commutation UC1, UC4, est constitué essentiellement par un module de puissance en demi pont classique. Il en est de même pour l'ensemble comprenant le second interrupteur T2, T3 et le troisième interrupteur TX1, TX4 de chaque unité de commutation UC1, UC4. Du fait que le quatrième interrupteur T5, T6 de chaque unité de commutation UC1, UC4 est bidirectionnel en courant, la commutation entre l'entrée de tension continue P, N et la ligne de tension de référence REF, dans un sens et dans l'autre, est réalisée essentiellement dans les modules de puissances, et ceci pour les phases actives et pour les phases réactives. La taille du circuit dans lequel sont réalisées les commutations s'en trouve réduite, et la présence de surtensions liées aux inductances parasites et au fort courant, est mieux contrôlée et confinée dans un seul module de commutation utilisant seulement deux interrupteurs, c'est-à-dire le premier interrupteur T1, T4 et le quatrième interrupteur T5, T6.

Le dispositif convertisseur 81 représenté à la figure 8 permet également d'homogénéiser la répartition des pertes dans les différents composants semi-conducteurs, pour lesquels le facteur de puissance et la tension de sortie VS sont variables, comme c'est le cas dans les alimentations sans interruption standards, dans les applications moteurs, telles que les variateurs de fréquence et/ou de tension.

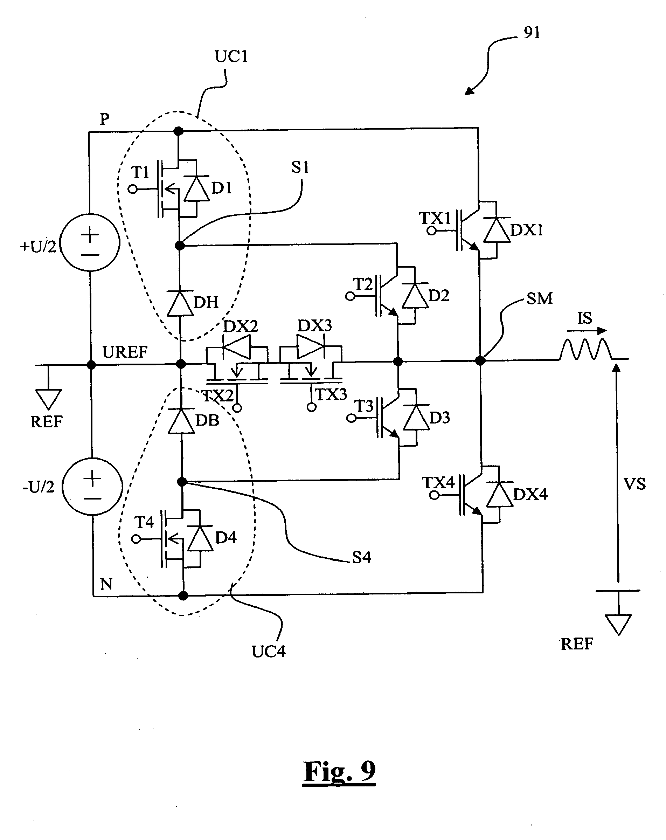

Dans le dispositif convertisseur 91 représenté à la figure 9, un cinquième interrupteur TX2, TX3 est monté entre la ligne de tension de référence REF et la sortie de signal modulé SM. Ce cinquième interrupteur comprend deux transistors à effet de champs de type MOS TX2, TX3 montés en série et orientés pour conduire le courant dans des directions opposées, ledit cinquième interrupteur comprenant, pour chacun desdits deux transistors, une diode DX2, DX3 montée en parallèle sur ledit transistor et orientée pour conduire lorsque ledit transistor est polarisé en inverse. Les transistors TX2, TX3 sont commandés pour favoriser la commutation des transistors T2, T3 des seconds interrupteurs.

Le dispositif convertisseur 91 représenté à la figure 9 permet de réduire les pertes en commutation dans des applications pour lesquelles le facteur de puissance de la charge est très différent de l'unité, telles que, par exemple, dans les compensateurs d'énergie réactive et dans les filtres actifs. La commutation à la fermeture du transistor T2, T3 du second interrupteur de chaque unité de commutation UC1, UC4 est précédée par la fermeture du transistor TX2, TX3 du cinquième interrupteur de ladite unité de commutation. Lors de l'ouverture du transistor T2, T3 du second interrupteur de chaque unité de commutation UC1, UC4, les transistors TX2, TX3 du cinquième interrupteur de ladite unité de commutation restent fermés le temps de la commutation du second interrupteur T2, T3 et s'ouvrent ensuite. On profite ainsi des performances en commutation des transistors à effet de champs de type MOS et de la faible chute de tension dans les transistors de type IGBT pendant leur conduction.

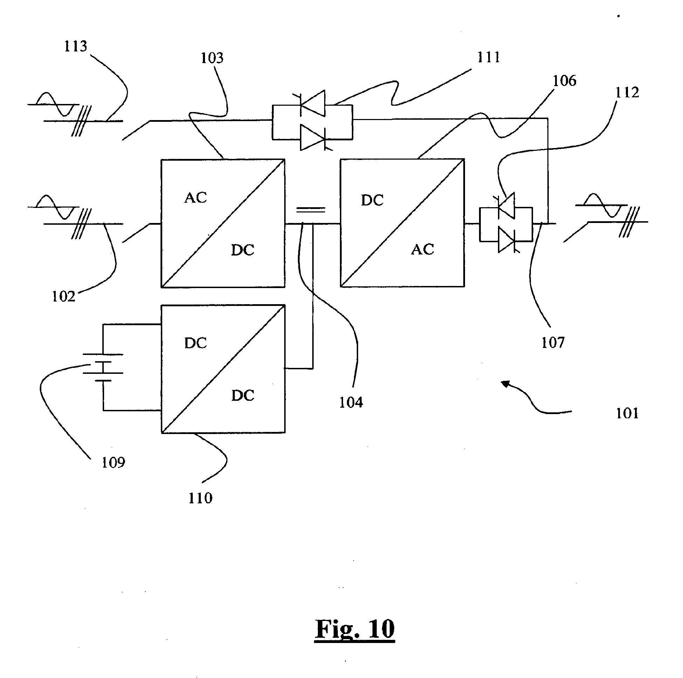

Les dispositifs convertisseurs décrits précédemment peuvent être utilisés dans une alimentation sans interruption 101 telle que celle représentée à la figure 10. Cette alimentation sans interruption comprend une entrée d'alimentation 102 sur laquelle est appliquée une tension d'entrée variable d'un premier réseau triphasé. L'alimentation sans interruption comprend un redresseur 103, ledit redresseur étant connecté entre, d'un côté, l'entrée d'alimentation 102 et, de l'autre côté, deux lignes de sortie 104 ou bus de tension sensiblement continue. L'alimentation sans interruption comprend un onduleur 106 correspondant à l'un des dispositifs convertisseurs décrit précédemment, ledit onduleur étant connecté entre les lignes de sortie 104 et une sortie 107 destiné à fournir une tension alternative triphasée sécurisée à une charge. Le bus de tension continue 104 est également connecté à une batterie 109 par l'entremise d'un convertisseur DC/DC 110.

Comme cela est visible sur la figure 10, des contacteurs statiques 111 et 112 permettent de sélectionner entre l'entrée d'alimentation 102 du premier réseau triphasé et une entrée d'alimentation 113 d'un second réseau également triphasé. Ainsi, il est possible d'alimenter la charge par l'intermédiaire du premier réseau sécurisé par l'alimentation sans interruption 101, et le cas échéant commuter sur le second réseau.

## Revendications

1. Dispositif convertisseur permettant de fournir une tension (VS) et un courant (IS) alternatifs par filtrage d'impulsions obtenues sur une sortie de signal modulé (SM) à partir de trois tensions (-U/2, UREF, U/2) sensiblement continues disponibles sur une ligne de tension de référence (REF) et sur deux entrées (P, N) de tensions continues de signes opposés de respectivement deux unités de commutation (UC1, UC4),
chaque unité de commutation comportant une sortie de commutation (S1, S4) pour fournir des impulsions ayant une amplitude variant entre la tension sur l'entrée de ladite unité de commutation, dans un premier état de commutation de ladite unité de commutation, et la tension sur ladite ligne de tension de référence, dans un second état de commutation de ladite unité de commutation,
chaque unité de commutation comportant un premier interrupteur (tel, T4) connecté entre l'entrée et la sortie de commutation (S1, S4) de ladite unité de commutation pour établir ledit premier état de commutation par fermeture dudit premier interrupteur,
ledit dispositif comprenant, pour chaque unité de commutation, un second interrupteur (T2, T3) associé à ladite unité de commutation, connecté entre ladite unité de commutation et ladite sortie de signal modulé pour activer ladite unité de commutation par fermeture dudit second interrupteur,
**caractérisé en ce que** ledit dispositif comprend, pour chaque unité de commutation, un troisième interrupteur (TX1, TX4) connecté entre l'entrée (P, N) de ladite unité de commutation et la sortie de signal modulé (SM), ledit premier interrupteur étant commandé de façon à passer du premier état de commutation au second état de commutation, dans un sens ou dans l'autre, en maintenant ledit troisième interrupteur ouvert, ledit troisième interrupteur étant commandé pour être fermé pendant au moins une partie de la durée dudit premier état de commutation.

2. Dispositif selon la revendication 1, **caractérisé en ce que** chaque unité de commutation (UC1, UC4) comprend, en outre, une diode (DH, DB) connectée entre la ligne de tension de référence (REF) et la sortie de commutation (S1, S4) de ladite unité de commutation, pour établir le second état de commutation lorsque le premier interrupteur (T1, T4) est ouvert.

3. Dispositif selon la revendication 1, **caractérisé en ce que** chaque unité de commutation (UC1, UC4) comprend, en outre, un quatrième interrupteur (T5, T6) connecté entre la ligne de tension de référence (REF) et la sortie de commutation (S1, S4) de ladite unité de commutation, pour établir le second état de commutation lorsque le premier interrupteur (T1, T4) est ouvert.

4. Dispositif selon la revendication 3, **caractérisé en ce que** le quatrième interrupteur de chaque unité de commutation est pourvu d'un transistor (T5, T6) et d'une diode (D5, D6) montée en parallèle sur ledit transistor et orientée pour conduire lorsque ledit transistor est polarisé en inverse.

5. Dispositif selon l'une quelconque des revendications 1 à 4, **caractérisé en ce que** le second interrupteur (T2, T3) associé à chaque unité de commutation (UC1, UC4) est disposé entre la sortie de commutation (S1, S4) de ladite unité de commutation et la sortie de signal modulé (SM).

6. Dispositif selon l'une quelconque des revendications 1 à 5, **caractérisé en ce que** les premiers, les seconds et les troisièmes interrupteurs comportent des transistors (T1, T2, T3, T4, TX1, TX4).

7. Dispositif selon la revendication 6, **caractérisé en ce que** les premiers, les seconds et les troisièmes interrupteurs comportent des diodes (D1, D2, D3, D4, DX1, DX4) montées en parallèle avec respectivement chacun des transistors (T1, T2, T3, T4, TX1, TX4) desdits interrupteurs et orientées pour conduire lorsque ledit transistor est polarisé en inverse.

8. Dispositif selon la revendication 7, **caractérisé en ce que** les transistors (T1, T2, T3, T4, TX1, TX4) des premiers, des seconds et des troisièmes interrupteurs sont des transistors bipolaires à grille isolée de type IGBT

9. Dispositif selon la revendication 6, **caractérisé en ce que** les transistors (T1, T4) des premiers interrupteurs sont des transistors à effet de champs en carbure de silicium, et **en ce que** les seconds et les troisièmes interrupteurs comportent des diodes (D2, D3, DX1, DX4) montées en parallèle avec respectivement chacun des transistors (T2, T3, TX1, TX4) desdits interrupteurs et orientées pour conduire lorsque ledit transistor est polarisé en inverse.

10. Dispositif selon la revendication 7, **caractérisé en ce que** le transistor (T1, T4) du premier interrupteur de chaque unité de commutation (UC1, UC4) est un transistor à effet de champs de type MOS, le second interrupteur associé à ladite unité de commutation (UC1, UC4) comportant plusieurs diodes en série montées en parallèle avec le transistor dudit second interrupteur (T2, T3) et orientées pour conduire lorsque ledit transistor est polarisé en inverse.

11. Dispositif selon la revendication 7, **caractérisé en ce qu'**il comprend un cinquième interrupteur monté entre la ligne de tension de référence (REF) et la sortie de signal modulé (SM).

12. Dispositif selon la revendication 11, **caractérisé en ce que** le cinquième interrupteur comprend deux transistors à effet de champs de type MOS (TX2, TX3) montés en série et orientés pour conduire le courant dans des directions opposées, ledit cinquième interrupteur comprenant, pour chacun desdits deux transistors, une diode (DX2, DX3) montée en parallèle sur ledit transistor et orientée pour conduire lorsque ledit transistor est polarisé en inverse.

13. Dispositif selon l'une quelconque des revendications 1 à 12, **caractérisé en ce qu'**il comprend, pour chaque unité de commutation (UC1, UC4) :
- des premiers moyens de commande (35, 41, 37, 43) agissant sur le premier interrupteur (T1, T4) de ladite unité de commutation pour fermer ou ouvrir ledit premier interrupteur pour passer du premier état de commutation au second état de commutation, dans un sens ou dans l'autre, en maintenant le troisième interrupteur ouvert
- des seconds moyens de commande (27, 31, 29, 33) agissant sur le troisième interrupteur (TX1, TX4) de ladite unité de commutation pour fermer ledit troisième interrupteur après le passage du second état de commutation au premier état de commutation.

14. Alimentation sans interruption (101) comprenant une entrée d'alimentation (102) sur laquelle est appliquée une tension d'entrée alternative, un redresseur (103) connecté à ladite entrée, deux lignes de tensions sensiblement continues de signes opposés connectées en sortie dudit redresseur, un onduleur (106) connecté aux dites lignes de tension de tension sensiblement continue et comportant une sortie (107) destinée à fournir une tension sécurisée, **caractérisée en ce que** ledit onduleur est un dispositif convertisseur selon l'une des revendications précédentes et fournit à partir des tensions sensiblement continues une tension sécurisée alternative.

## Patentansprüche

1. Umrichterschaltung zur Lieferung einer Wechselspannung (VS) und eines Wechselstroms (IS) durch Filterung von an einem Modulationssignalausgang (SM) bereitgestellten und aus drei Quasi-Gleichspannungen (-U/2, UREF, U/2) gewonnenen Impulsen, welche Spannungen an einer Referenzspannungsleitung (REF) sowie an zwei Gleichspannungseingängen (P, N) entgegengesetzter Polarität zweier Schaltgruppen (UC1, UC4) anstehen, wobei jede Schaltgruppe einen Schaltausgang (S1, S4) zur Bereitstellung von Impulsen einer Amplitude umfasst, die zwischen der am Eingang der genannten Schaltgruppe anliegenden Spannung gemäß einem ersten Schaltzustand der genannten Schaltgruppe und der an der genannten Referenzspannungsleitung anliegenden Spannung gemäß einem zweiten Schaltzustand der genannten Schaltgruppe variiert,
wobei jede Schaltgruppe einen, zwischen den Eingang und den Schaltausgang (S1, S4) der genannten Schaltgruppe geschalteten ersten Schalter (T1, T4) zur Herbeiführung des genannten ersten Schaltzustand durch Schließen des ersten Schalters umfasst, wobei die genannte Umrichterschaltung in jeder Schaltgruppe einen, der genannten Schaltgruppe zugeordneten zweiten Schalter (T2, T3) umfasst, der zwischen die genannte Schaltgruppe und den genannten Modulationssignalausgang geschaltet ist, um die genannte Schaltgruppe durch Schließen des genannten zweiten Schalters zu aktivieren, **dadurch gekennzeichnet, dass** die genannte Urmichterschaltung in jeder Schaltgruppe einen zwischen den Eingang (P, N) der genannten Schaltgruppe und den Modulationssignalausgang (SM) geschalteten dritten Schalter (TX1, TX4) umfasst, wobei der genannte erste Schalter so angesteuert wird, dass er vom ersten Schaltzustand in den zweiten Schaltzustand, und umgekehrt, übergeht, während der genannte dritte Schalter geöffnet bleibt, und der genannte dritte Schalter so angesteuert wird, dass er während mindestens eines Teils der Wirkdauer des genannten ersten Schaltzustands geschlossen wird.

2. Schaltung nach Anspruch 1, **dadurch gekennzeichnet, dass** jede Schaltgruppe (UC1, UC4) außerdem eine zwischen die Referenzspannungsleitung (REF) und den Schaltausgang (S1, S4) der genannten Schaltgruppe geschaltete Diode (DH, DB) umfasst, die dazu dient, den zweiten Schaltzustand herbeizuführen, wenn der erste Schalter (T1, T4) geöffnet ist.

3. Schaltung nach Anspruch 1, **dadurch gekennzeichnet, dass** jede Schaltgruppe (UC1, UC4) außerdem einen zwischen die Referenzspannungsleitung (REF) und den Schaltausgang (S1, S4) der genannten Schaltgruppe geschalteten vierten Schalter (T5, T6) umfasst, der dazu dient, den zweiten Schaltzustand herbeizuführen, wenn der erste Schalter (T1, T4) geöffnet ist.

4. Schaltung nach Anspruch 3 **dadurch gekennzeichnet, dass** der vierte Schalter jeder Schaltgruppe einen Transistor (T5, T6) und eine Diode (D5, D6) umfasst, welche Diode parallel zum genannten Transistor geschaltet und so gepolt ist, dass sie leitet, wenn der Transistor im Sperrzustand betrieben wird.

5. Schaltung nach irgendeinem der Ansprüche 1 bis 4, **dadurch gekennzeichnet, dass** der jeder Schaltgruppe (UC1, UC4) zugeordnete zweite Schalter (T2, T3) zwischen den Schaltausgang (S1, S4) der genannten Schaltgruppe und den Modulationssignalausgang (SM) geschaltet ist.

6. Schaltung nach irgendeinem der Ansprüche 1 bis 5, **dadurch gekennzeichnet, dass** der erste, der zweite und der dritte Schalter jeweils Transistoren (T1, T2, T3, T4, TX1, TX4) umfassen.

7. Schaltung nach Anspruch 6, **dadurch gekennzeichnet, dass** der erste, der zweite und der dritte Schalter Dioden (D1, D2, D3, D4, DX1, DX4) umfassen, die parallel zu den Transistoren (T1, T2, T3, T4, TX1, TX4) des zugehörigen Schalters geschaltet und so gepolt sind, dass sie leiten, wenn der genannte Transistor im Sperrzustand betrieben wird.

8. Schaltung nach Anspruch 7, **dadurch gekennzeichnet, dass** die Transistoren (T1, T2, T3, T4, TX1, TX4) des ersten, zweiten und dritten Schalters als Bipolartransistoren mit isoliertem Gate vom Typ IGBT ausgeführt sind.

9. Schaltung nach Anspruch 6, **dadurch gekennzeichnet, dass** die Transistoren (T1, T4) der ersten Schalter als Siliziumkarbid-Feldeffekttransistoren ausgeführt sind und dass die zweiten und dritten Schalter Dioden (D2, D3, DX1, DX4) umfassen, die jeweils parallel zu den Transistoren (T2, T3, TX1, TX4) der genannten Schalter geschaltet und so gepolt sind, dass sie leiten, wenn der genannte Transistor im Sperrzustand betrieben wird.

10. Schaltung nach Anspruch 7, **dadurch gekennzeichnet, dass** der Transistor (T1, T4) des ersten Schalters jeder Schaltgruppe (UC1, UC4) als MOS-Feldeffekttransistor ausgeführt ist, wobei der, der genannten zweiten Schaltgruppe (UC1, UC4) zugeordnete zweite Schalter mehrere hintereinander geschaltete Dioden umfasst, die parallel zum Transistor des genannten zweiten Schalters (T2, T3) geschaltet und so gepolt sind, dass sie leiten, wenn der genannte Transistor im Sperrzustand betrieben wird.

11. Schaltung nach Anspruch 7, **dadurch gekennzeichnet dass** sie einen fünften Schalter umfasst, der zwischen die Referenzspannungsleitung (REF) und den Modulationssignalausgang (SM) geschaltet ist.

12. Schaltung nach Anspruch 11, **dadurch gekennzeichnet, dass** der fünfte Schalter zwei MOS-Feldeffekttransistoren (TX2, TX3) umfasst, die in Reihe geschaltet und so gepolt sind, dass sie den Strom in jeweils entgegengesetzter Richtung durchleiten, wobei der genannte fünfte Schalter eine jedem der beiden Transistoren zugeordnete Diode (DX2, DX3) umfasst, die parallel zum genannten Transistor geschaltet und so gepolt ist, dass sie leitet, wenn der genannte Transistor im Sperrzustand betrieben wird.

13. Schaltung nach irgendeinem der Ansprüche 1 bis 12, **dadurch gekennzeichnet, dass** sie in jeder Schaltgruppe (UC1, UC4)
- erste Steuermittel (35, 41, 37, 43), die auf den ersten Schalter (T1, T4) der genannten Schaltgruppe wirken, um den genannten ersten Schalter zu schließen bzw. zu öffnen und so den Übergang vom ersten Schaltzustand in den zweiten Schaltzustand bzw. umgekehrt zu bewirken, während der dritte Schalter geöffnet bleibt, sowie
- zweite Steuermittel (27, 31, 29, 33) umfasst, die auf den dritten Schalter (TX1, TX4) der genannten Schaltstufe wirken, um nach dem Übergang vom zweiten Schaltzustand in den ersten Schaltzustand den genannten dritten Schalter zu schließen.

14. Unterbrechungsfreie Stromversorgung (101) mit einem Einspeiseeingang (102), an den eine Eingangs-Wechselspannung angelegt wird, einem an den genannten Eingang angeschlossenen Gleichrichter (103), zwei an den Gleichrichterausgang angeschlossenen Leitungen mit Quasi-Gleichspannungen entgegengerichteter Polarität, einem an die genannten Quasi-Gleichspannungsleitungen angeschlossenen Wechselrichter (106) mit einem Ausgang (107), der dazu dient, eine gesicherte Ausgangsspannung zu liefern, **dadurch gekennzeichnet, dass** der genannte Wechsehichter als Umrichter nach einem der vorhergehenden Ansprüche ausgebildet ist und eine aus den genannten Quasi-Gleichspannungen gewonnene, gesicherte Wechselspannung liefert.

## Claims

1. Converter apparatus supplying an alternating voltage (VS) and an alternating current (IS) through filtering of pulses obtained on a modulated signal output (SM) from three more or less direct voltages (-U/2, UREF, U/2) available on a reference voltage line (REF) and on two inputs (P, N) of direct voltages of opposite signs of two switching units (UC1, UC4) respectively,
each switching unit comprising a switching output (S1, S4) to supply pulses having an amplitude varying between the voltage on the input of said switching unit, in a first switching state of said switching unit, and the voltage on said reference voltage line in a second switching state of said switching unit,
each switching unit comprising a first switch (T1, T4), connected between the input and the switching output (S1, S4) of said switching unit in order to establish said first switching state through conduction of said first switch,
said apparatus including, for each switching unit, a second switch (T2, T3) associated with said switching unit, connected between said switching unit and said modulated signal output in order to activate said switching unit through closure of said second switch,
**characterised in that** said apparatus includes, for each switching unit, a third switch (TX1, TX4) connected between the input (P, N) of said switching unit and the modulated signal output (SM), said first switch being controlled in such a way as to change from the first switching state to the second switching state, in one direction or the other, by keeping said third switch open, said third switch being controlled to be closed during at least a part of the duration of said first switching state.

2. Apparatus according to claim 1, **characterized in that** each switching unit (UC1, UC4) furthermore includes a diode (DH, DB) connected between the reference voltage line (REF) and the switching output (S1, S4) of said switching unit, in order to establish the second switching state when the first switch (T1, T4) is open.

3. Apparatus according to claim 1, **characterized in that** each switching unit (UC1, UC4) furthermore includes a fourth switch (T5, T6) connected between the reference voltage line (REF) and the switching output (S1, S4) of said switching unit, in order to establish the second switching state when the first switch (T1, T4) is open.

4. Apparatus according to claim 3, **characterized in that** fourth switch of each switching unit is provided with a transistor (T5, T6) and a diode (D5, D6) mounted in parallel on said transistor and oriented to conduct when said transistor is reverse-biased.

5. Apparatus according to any one of claims 1 to 4, **characterized in that** the second switch (T2, T3) associated with each switching unit (UC1, UC4) is preferably disposed between the switching output (S1, S4) of said switching unit and the modulated signal output (SM).

6. Apparatus according to any one of claims 1 to 5, **characterized in that** the first, second and third switches comprise transistors (T1, T2, T3, T4, TX1, TX4).

7. Apparatus according to claim 6, **characterized in that** the first, second and third switches comprise diodes (D1, D2, D3, D4, DX1, DX4) mounted in parallel with respectively each of the transistors (T1, T2, T3, T4, TX1, TX4) of said switches and oriented to conduct when said transistor is reverse-biased.

8. Apparatus according to claim 7, **characterized in that** the transistors (T1, T2, T3, T4, TX1, TX4) of the first, second and third switches are Insulated Gate Bipolar Transistors (IGBT).

9. Apparatus according to claim 6, **characterized in that** the transistors (T1, T4) of the first switches are silicon carbide field effect transistors, and the second and third switches comprise diodes (D2, D3, DX1, DX4) mounted in parallel with respectively each of the transistors (T2, T3, TX1, TX4) of said switches and oriented to conduct when said transistor is reverse-biased.

10. Apparatus according to claim 7, **characterized in that** the transistor (T1, T4) of the first switch of each switching unit (UC1, UC4) is an MOS field effect transistor, the second switch associated with said switching unit (UC1, UC4) comprising a plurality of diodes in series mounted in parallel with the transistor of said second switch (T2, T3) and oriented to conduct when said transistor is reverse-biased.

11. Apparatus according to claim 7, **characterized in that** it includes a fifth switch mounted between the reference voltage line (REF) and the modulated signal output (SM).

12. Apparatus according to claim 11, **characterized in that** the fifth switch advantageously includes two MOS field effect transistors (TX2, TX3) mounted in series and oriented to conduct the current in opposite directions, said fifth switch including, for each of said two transistors, a diode (DX2, DX3) mounted in parallel on said transistor and oriented to conduct when said transistor is reverse-biased.

13. Apparatus according to any one of claims 1 to 12, **characterized in that** the converter apparatus includes, for each switching unit (UC1, UC4):
- first control means (35, 41, 37, 43) acting on the first switch (T1, T4) of said switching unit to close or open said first switch to change from the first switching state to the second switching state, in one direction or the other, by keeping the third switch open;
- second control means (27, 31, 29, 33) acting on the third switch (TX1, TX4) of said switching unit to close said third switch following the transition from the second switching state to the first switching state.

14. Uninterruptible power supply (101) including a supply input (102) to which an alternating input voltage is applied, a rectifier (103) connected to said input, two lines of more or less direct voltages of opposite signs connected to the output of said rectifier, an inverter (106) connected to said voltage lines of more or less direct voltage and comprising an output (107) intended to supply a secured voltage, **characterised in that** said inverter is a converter apparatus according to one of the preceding claims and supplies a secured alternating voltage from the more or less direct voltages.
